# EUROPÄISCHE PATENTSCHRIFT

(11) **EP 4 649 796 B1**
(45) Veröffentlichungstag und Bekanntmachung des Hinweises auf die Patenterteilung: **25.11.2026**
(21) Anmeldenummer: 25174796.0
(22) Anmeldetag: 07.05.2025
(51) Int. Cl.: A01B 61/04

(54) **ZINKENANORDNUNG EINES BODENBEARBEITUNGSGERÄTES UND BODENBEARBEITUNGSGERÄT**
TINE ASSEMBLY OF A SOIL WORKING DEVICE AND SOIL WORKING DEVICE
ENSEMBLE DENT D'UN APPAREIL DE TRAITEMENT DU SOL ET APPAREIL DE TRAITEMENT DU SOL

(30) Priorität: 15.05.2024 DE 102024113587
(43) Veröffentlichungstag der Anmeldung: 19.11.2025
(73) Patentinhaber: Landmaschinenfabrik Köckerling GmbH & Co. KG, 33415 Verl (DE)
(72) Erfinder: KRAWINKEL, Jan, 33100 Paderborn (DE); STRATMANN, Matthias, 59229 Ahlen-Dollberg (DE); BAUER, Ulrich, 85356 Freising (DE); KATTENSTROTH, Ralf, 33334 Gütersloh (DE)
(74) Vertreter: Hoefer & Partner Patentanwälte mbB

(56) Entgegenhaltungen:
- EP-A1- 0 761 077
- DE-A1- 10 207 020
- DE-A1- 102009 051 431
- US-A- 3 981 367
- US-A- 5 303 780
- US-B2- 11 723 297

## Beschreibung

Die Erfindung betrifft eine Zinkenanordnung eines Bodenbearbeitungsgerätes. Ferner zeigt die Erfindung das Bodenbearbeitungsgerät mit der Zinkenanordnung. Bei dem Bodenbearbeitungsgerät handelt es sich beispielsweise um einen Grubber.

Grubber nach dem Stand der Technik umfassen einen oder mehrere Zinkenstiele, wobei sich an jedem Zinkenstiel ein Schar befindet. Bei der Benutzung wird der Grubber mit einer Zugmaschine durch den Boden gezogen, um diesen zu lockern. An dem Zinkenstiel des Grubbers kann ein Leitelement, beispielsweise ein Leitblech, angeordnet sein. Eine solche Anordnung zeigt zum Beispiel DE 10 2009 058 412 A1.

US 3 981 367 A zeigt eine sich selbständig zurücksetzende Federauslösevorrichtung für einen Zinken eines Grubbers, die zur Befestigung an einer Halterung vorgesehen ist, die an der Querstange eines landwirtschaftlichen Bodenbearbeitungsgeräts angebracht ist. Das untere Ende des Zinkens trägt ein Bodenbearbeitungswerkzeug, und das vordere Ende erstreckt sich zwischen einem Paar seitlich beabstandeter Seitenplatten, die von der Befestigungshalterung gestützt werden, die an die Unterseite der Werkzeugleiste angrenzt, wobei das vordere Ende des Zinkens so ausgelegt ist, dass es um die Umfangsfläche eines Drehzapfens schwenkbar ist, der sich zwischen und durch die seitlich beabstandeten Seitenplatten erstreckt. Ein Anschlagelement in Form einer Blattfeder, das sich in überlagerndem Kontakt mit der Oberseite des Zinkens erstreckt, wird in geeigneter Weise gegen den vorderen Endabschnitt des Zinkens gehalten, um den Zinken in einer schwenkbaren Lagerbeziehung gegenüber der Umfangsfläche des Drehzapfens zu halten.

Es ist Aufgabe der Erfindung eine Zinkenanordnung eines Bodenbearbeitungsgerätes anzugeben, die eine möglichst betriebsfeste, effiziente und wartungsarme Bearbeitung der Böden ermöglicht.

Die Lösung dieser Aufgabe erfolgt durch die Merkmale des unabhängigen Anspruchs. Die abhängigen Ansprüche haben bevorzugte Weitergestaltungen der Erfindung zum Gegenstand.

So zeigt die Erfindung eine Zinkenanordnung eines Bodenbearbeitungsgerätes. Bei dem Bodenbearbeitungsgerät handelt es sich insbesondere um einen Grubber.

Die einzelne Zinkenanordnung umfasst einen Zinkenstiel. Der Zinkenstiel ist als Blattfeder ausgebildet. Im Folgenden werden Angaben wie "oben" und "unten" sowie "vorne" und "hinten" verwendet. Diese Angaben beziehen sich auf die Verwendung der Zinkenanordnung in Verbindung mit dem Bodenbearbeitungsgerät, wobei zu berücksichtigen ist, dass ein solches Bodenbearbeitungsgerät so verwendet wird, dass die Zugrichtung bzw. Fahrtrichtung vorne liegt und die untere Seite dem Boden zugewandt ist bzw. sich im Boden befindet.

Der Zinkenstiel weist ein oberes Ende auf. Dieses ist zur Befestigung an einem Rahmen des Bodenbearbeitungsgerätes ausgebildet. Insbesondere ist das obere Ende des Zinkenstiels am Rahmen des Bodenbearbeitungsgerätes anschraubbar. Der Rahmen erstreckt sich insbesondere horizontal und bezüglich der Zugrichtung des Bodenbearbeitungsgerätes in Querrichtung.

Die Zinkenanordnung umfasst ein Schar am unteren Ende des Zinkenstiels. Das Schar kann integraler Bestandteil des Zinkenstiels sein. Vorzugsweise handelt sich aber um ein Schar, das auswechselbar im unteren Ende des Zinkenstiels befestigt, insbesondere angeschraubt, ist. Insbesondere ist vorgesehen, dass die Zinkenanordnung ein Gänsefußschar aufweist, wobei auch eine andersartiges Schar verwendet werden kann. Aus der Gestaltung des Zinkenstiels und des Schars ergibt sich die Zugrichtung der Zinkenanordnung und somit auch die Zugrichtung des Bodenbearbeitungsgerätes. Dementsprechend ist das Schar durch den Boden in dieser Zugrichtung ziehbar.

Der Zinkenstiel der erfindungsgemäßen Zinkenanordnung ist als Blattfeder ausgebildet, sodass das Schar beispielsweise bei einem Kontakt mit einem großen Stein entgegen der Zugrichtung nach hinten elastisch ausweichen kann. Bei der erfindungsgemäßen Zinkenanordnung ist eine Zusatzfeder vorgesehen. Diese Zusatzfeder erhöht die Widerstandskraft der Zinkenanordnung im Boden. Die Zusatzfeder weist einen Federbereich und ein Fangelement auf. Der Federbereich der Zusatzfeder ist dazu angeordnet und ausgebildet, die Federkraft des als Blattfeder ausgebildeten Zinkenstiels zu erhöhen, insbesondere bei einer Bewegung des Zinkenstiels entgegen der Zugrichtung.

Beim Zurückfedern, also bei der Bewegung des Zinkenstiels und der Zusatzfeder in Zugrichtung, soll vermieden werden, dass der Zinkenstiel zu weit nach vorne federt und dabei zu weit von der Zusatzfeder abhebt. Hierzu ist das Fangelement vorgesehen, dass den Zinkenstiel zumindest teilweise, jedoch vorzugsweise vollständig, umgreift. Das Fangelement kann auch als Fangöse bezeichnet werden.

Die erfindungsgemäße Zinkenanordnung umfasst ferner ein Leitelement, dass ausgebildet und angeordnet ist, einen Gutsstrom aus Boden- und/oder Pflanzenmaterial am Fangelement vorbeizuleiten. Ohne dem erfindungsgemäß vorgesehenen Leitelement würde bei Ziehen des Schars durch den Boden der Gutsstrom entlang des Zinkenstiels nach oben steigen, bis zum Fangelement. Dabei könnte es zu einer Ansammlung des Gutsstroms am Fangelement kommen. Dabei würde das Fangelement ein Abfließen des Gutsstroms nach oben und nach hinten zumindest teilweise blockieren, wodurch es zu einer Verstopfung der Zinkenanordnung bzw. des gesamten Bodenbearbeitungsgerätes kommen könnte. Um dies zu vermeiden ist erfindungsgemäß vorgesehen, dass das Leitelement entsprechend ausgebildet und angeordnet ist, den Gutsstrom welcher durch Ziehen des Schars durch den Boden aufsteigt, am Fangelement vorbeizuleiten.

In bevorzugter Ausführung ist vorgesehen, dass der Zinkenstiel S-förmig gebogen ist und dabei einen oberen Bogen und einen unteren Bogen bildet. Der untere Bogen endet mit dem unteren Ende des Zinkenstiels, sodass das Schar am unteren Bogen ausgebildet oder befestigt ist. Der obere Bogen endet mit dem oberen Ende des Zinkenstiels, sodass am oberen Bogen die Befestigung zum Rahmen ausgebildet ist. Die konvexe Seite des oberen Bogens und die konkave Seite des unteren Bogens sind in Zugrichtung ausgerichtet.

Durch die S-förmige Ausgestaltung des Zinkenstiels weist der Zinkenstiel einen Übergang vom oberen Bogen in den unteren Bogen auf. Das Fangelement umgreift den Zinkenstiel vorzugweise im Bereich dieses Übergangs. Dabei kann, wie bereits beschrieben, das Fangelement den Zinkenstiel zumindest teilweise, vorzugsweise vollständig, umgreifen.

Das Leitelement ist vorzugweise an der konkaven Seite des unteren Bogens angeordnet. Das Leitelement befindet sich somit auf der Vorderseite des unteren Bogens und somit auf der Vorderseite des Zinkenstiels.

Es ist vorgesehen, dass das Leitelement eine konkave Leitelement-Vorderseite aufweist. Entlang dieser konkaven Leitelement-Vorderseite bewegt sich der Gutsstrom bei Benutzung der Zinkenanordnung nach oben.

Um mittels des Leitelementes den Gutsstrom am Fangelement vorbeizuleiten sind zwei unterschiedliche Varianten vorgesehen:
Gemäß einer ersten Variante endet das Leitelement noch vor dem Fangelement. Dabei ist vorgesehen, dass eine am oberen Ende des Leitelements fortgeführte imaginäre Extrapolation der konkaven Leitelement-Vorderseite unter dem Fangelement vorbeiführt. Das hier beschriebene "Enden des Leitelements noch vor dem Fangelement" kann man sich wie folgt vorstellen: Verlängert man das Fangelement vertikal nach unten, so ergibt sich eine gedankliche Linie, die von dem oberen Ende des Leitelements nicht geschnitten wird, da das Leitelement noch vor dem Fangelement endet.

Gemäß einer zweiten Variante erstreckt sich das Leitelement mit seinem oberen Ende unter dem Fangelement vorbei. Dadurch wird erreicht, dass nicht die imaginäre Extrapolation der konkaven Leitelement-Vorderseite, sondern die Leitelement-Vorderseite selbst unter dem Fangelement vorbeiführt.

In beiden Varianten kann der Gutsstrom an dem Fangelement vorbeigeführt werden. Bevorzugt ist vorgesehen, dass die konkave Leitelement-Vorderseite einen kleineren Krümmungsradius aufweist als die konkave Seite des unteren Bogens des Zinkenstiels.

Das Leitelement ist vorzugsweise seitlich gewendelt, um den Gutsstrom nicht nur nach oben, sondern gleichzeitig auch zur Seite zu leiten. Dadurch wird erreicht, dass ein Teil des Gutsstroms oder der gesamte Gutsstrom nicht so hoch steigt, um das Fangelement zu erreichen; vielmehr erfolgt noch unterhalb des Fangelements eine Ableitung zur Seite
Das Leitelement kann grundsätzlich aus beliebigem Material gefertigt werden. Vorzugsweise ist das Leitelement aus Metall und/oder Kunststoff und/oder Elastomer gefertigt. Sofern das Schar nicht einteiliger Bestandteil des Zinkenstiels ist, ist es möglich, Leitelement und Schar einteilig auszugestalten. In bevorzugter Ausführung handelt es sich jedoch um zwei Einzelteile, nämlich Schar und Leitelement, die am Zinkenstiel befestigt und somit auch austauschbar sind.

Zur Befestigung des Leitelements am Zinkenstiel ist bevorzugt vorgesehen, dass das Leitelement den Zinkenstiel mittels einer Klemmvorrichtung umgreift. Zusätzlich oder alternativ hierzu ist bevorzugt vorgesehen, dass das Leitelement mittels einer Leitelementverschraubung am Zinkenstiel befestigt ist. Diese Leitelementverschraubung kann eine oder mehrere Schrauben aufweisen.

Das Leitelement kann zwischen Schar und Zinkenstiel eingeklemmt sein. Dabei ist es möglich, dass die Scharverschraubung auch das Leitelement durchdringt. Alternativ kann das Leitelement auch über der Scharverschraubung enden, so dass das Leitelement lediglich zwischen Schar und Zinkenstiel eingeklemmt ist, die Scharverschraubung jedoch nicht durch das Leitelement verläuft.

Wie bereits beschrieben, ist das Fangelement der Zusatzfeder dazu ausgebildet, eine Bewegung des Zinkenstiels relativ zur Zusatzfeder im begrenzten Umfang zu ermöglichen. Deshalb bildet das Fangelement insbesondere einen Anschlag für den Zinkenstiel.

Der Federbereich der Zusatzfeder ist vorzugsweise als Blattfeder ausgebildet. Der Federbereich befindet sich bezüglich der Zugrichtung vorzugsweise hinter dem Zinkenstiel. Insbesondere ist der Federbereich der Zusatzfeder an der konkaven Seite des oberen Bogens des Zinkenstiels angeordnet.

Der Federbereich der Zusatzfeder folgt mit seiner Krümmung vorzugsweise der konkaven Seite des oberen Bogens des Zinkenstiels.

Der Federbereich der Zusatzfeder kann vorzugsweise zumindest teilweise am Zinkenstiel anliegen.

Die Zusatzfeder endet vorzugsweise mit dem Fangelement. Der Federbereich und das Fangelement sind vorzugsweise miteinander verschweißt oder sind zusammen einteilig gefertigt.

Vorzugsweise ist vorgesehen, dass der Federbereich zur Befestigung am Rahmen des Bodenbearbeitungsgerätes ausgebildet ist. Es ist insbesondere vorgesehen, dass sowohl der Federbereich der Zusatzfeder als auch der Zinkenstiel an dem Rahmen befestigbar sind.

Die Erfindung zeigt ferner ein Bodenbearbeitungsgerät. Das Bodenbearbeitungsgerät umfasst den bereits erwähnten Rahmen und mehrere am Rahmen befestigte Zinkenanordnungen, wie sie vorab beschrieben wurden. Das Bodenbearbeitungsgerät weist eine Zugvorrichtung auf, die am Rahmen angeordnet ist und die es ermöglicht, das Bodenbearbeitungsgerät mittels einer Zugmaschine in Zugrichtung zu ziehen. Die Zugrichtung des Bodenbearbeitungsgerätes entspricht der Fahrtrichtung der Zugmaschine.

Die im Rahmen der Zinkenanordnung beschriebenen vorteilhaften Ausgestaltungen und die zugehörigen Unteransprüche finden entsprechend vorteilhafte Anwendung für das erfindungsgemäße Bodenbearbeitungsgerät.

Weitere Einzelheiten, Vorteile und Merkmale der vorliegenden Erfindung ergeben sich aus nachfolgender Beschreibung eines Ausführungsbeispiels anhand der Zeichnungen. Es zeigt:
- Fig. 1: eine Seitenansicht und eine Vorderansicht eines Ausschnittes eines erfindungsgemäßen Bodenbearbeitungsgerätes mit einer erfindungsgemäßen Zinkenanordnung gemäß einem Ausführungsbeispiel,
- Fig. 2: eine Seitenansicht und eine Vorderansicht eines Ausschnittes des erfindungsgemäßen Bodenbearbeitungsgerätes mit der erfindungsgemäßen Zinkenanordnung gemäß dem Ausführungsbeispiel in einer Variante,
- Fig. 3: eine Seitenansicht und eine Vorderansicht eines Ausschnittes des erfindungsgemäßen Bodenbearbeitungsgerätes mit der erfindungsgemäßen Zinkenanordnung gemäß dem Ausführungsbeispiel in einer weiteren Variante
- Fig. 4: eine perspektivische Ansicht eines Ausschnitts des erfindungsgemäßen Bodenbearbeitungsgerätes mit mehreren der erfindungsgemäßen Zinkenanordnungen gemäß dem Ausführungsbeispiel, und
- Fig. 5: eine Seitenansicht eines Ausschnitts des erfindungsgemäßen Bodenbearbeitungsgerätes mit mehreren der erfindungsgemäßen Zinkenanordnungen gemäß dem Ausführungsbeispiel.

Im Folgenden wird eine Zinkenanordnung 1 eines Bodenbearbeitungsgerätes 100 im Detail erläutert. Die Figuren zeigen von dem Bodenbearbeitungsgerät 100 lediglich einen Teil des Rahmens 101. Das vollständige Bodenbearbeitungsgerät 100 weist entlang des Rahmens 101 mehrere der Zinkenanordnungen 1 auf. Das Bodenbearbeitungsgerät 100 wird entlang der eingezeichneten Zugrichtung 2 mittels einer Zugmaschine bewegt.

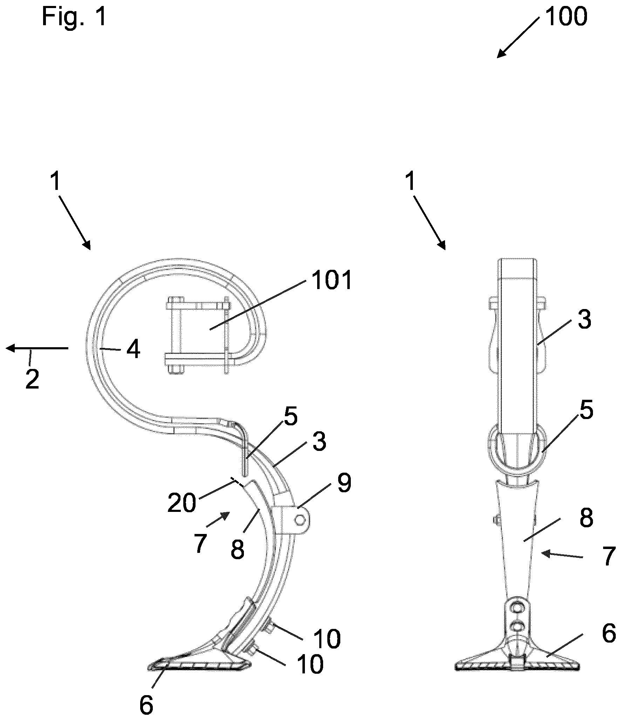

Die Figuren 1, 2 und 3 zeigen jeweils die Zinkenanordnung 1 in einer Seitenansicht und einer Vorderansicht. Anhand der unterschiedlichen Varianten in den Figuren 1, 2 und 3 werden verschiedene Optionen der Zinkenanordnung 1 erläutert.

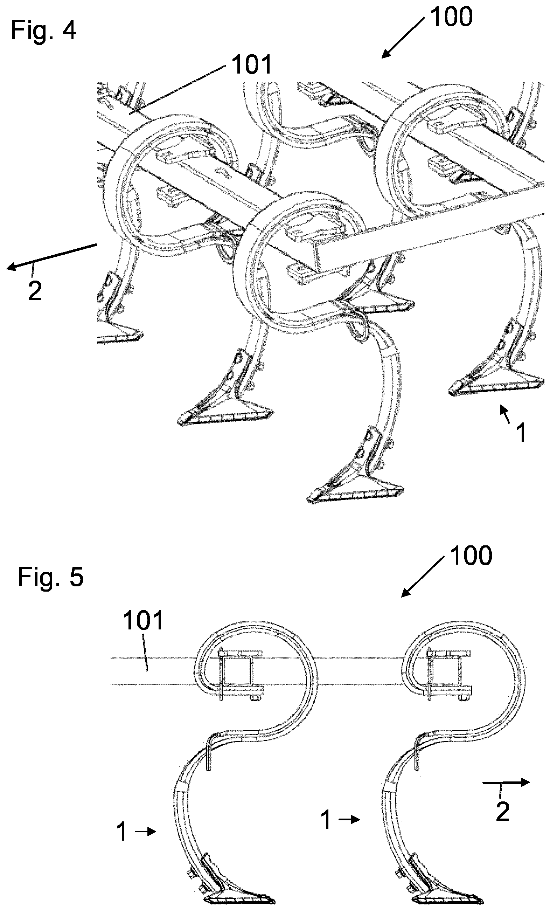

Figuren 4 und 5 verdeutlichen die Positionierung und Befestigung mehrerer der Zinkenanordnungen 1 am Rahmen 101 des Bodenbearbeitungsgeräts 100. Diese Positionierung und Befestigung der Zinkenanordnungen 1 gemäß den Figuren 4 und 5 erfolgt unabhängig von der in den Figuren 1 bis 3 konkret dargestellten Ausgestaltung der Zinkenanordnungen 1, sodass jede der in Figuren 1 bis 3 gezeigten Zinkenanordnungen 1 am Rahmen 101 gemäß Figuren 4 und 5 angeordnet werden kann. Ein im Folgenden beschriebenes Leitelement 7 ist in den Figuren 4 und 5 der Übersichtlichkeit halber ausgeblendet.

Die Figuren 1, 2 und 3 zeigen, dass die Zinkenanordnung 1 einen Zinkenstiel 3 aufweist. Der Zinkenstiel 3 ist mit seinem oberen Ende am Rahmen 101 befestigt. Am unteren Ende des Zinkenstiels 3 befindet sich ein Schar 6. Der Zinkenstiel 3 ist S-förmig gebogen und ist als Blattfeder ausgebildet. Durch die S-Form ergeben sich ein oberer Bogen und ein unterer Bogen. Die konvexe Seite des oberen Bogens und die konkave Seite des unteren Bogens sind in Zugrichtung 2 nach vorne ausgerichtet.

Ferner zeigen die Figuren, dass die Zinkenanordnung 1 eine Zusatzfeder aufweist, die sich aus einem Federbereich 4 und einem Fangelement 5 zusammensetzt. Der Federbereich 4 der Zusatzfeder ist ebenfalls als Blattfeder ausgebildet und befindet sich an der Rückseite des oberen Bogens, also an der konkaven Seite des oberen Bogens des Zinkenstiels 3.

Das obere Ende der Zusatzfeder ist am Rahmen 101 befestigt. An der unteren Seite geht der Federbereich 4 der Zusatzfeder in das Fangelement 5 über.

Bei dem Fangelement 5 handelt es sich um eine Fangöse, die den Zinkenstiel 3 vollständig umgreift. Das Fangelement 5 befindet sich dabei am Übergang des oberen Bogens in den unteren Bogen des Zinkenstiels 3.

An der Vorderseite des Zinkenstiels 3, insbesondere an der konkaven Seite des unteren Bogens des Zinkenstiels 3, befindet sich ein Leitelement 7. Dieses Leitelement 7 weist eine konkave Leitelement-Vorderseite 8 auf. Wie im allgemeinen Teil der Beschreibung erklärt, dient das Leitelement 7 dazu, aufsteigenden Gutsstrom an dem Fangelement 5 vorbeizuleiten, um so ein Verstopfen des Bodenbearbeitungsgerätes 100 zu vermeiden.

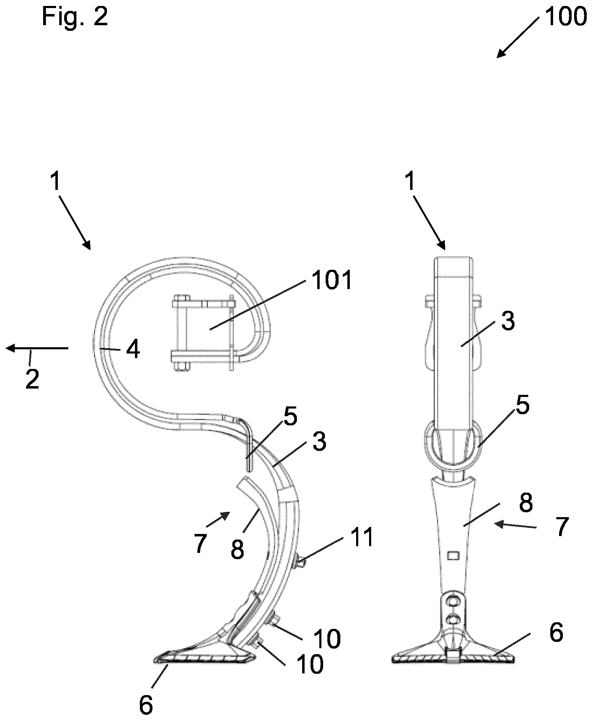

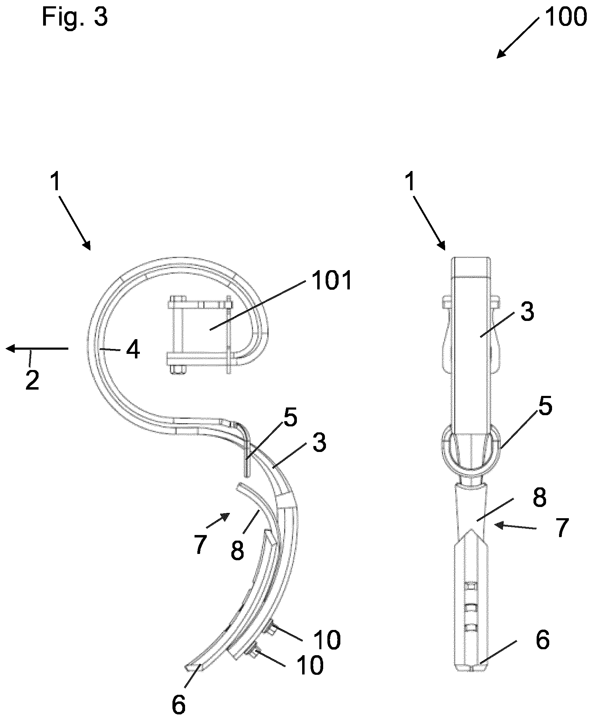

Eine Zusammenschau der Figuren 1, 2 und 3 zeigt, dass die Zinkenanordnung 1 unterschiedliche Schare 6 aufweisen kann. Figuren 1 und 2 zeigen beispielhaft die Verwendung eines Gänsefußschars, wohingegen in Figur 3 ein einfaches Schar zur Anwendung kommt.

Unabhängig von der Ausgestaltung des Schars 6 kann das Leitelement 7 unterschiedlich ausgestaltet sein. Figur 1 verdeutlicht, dass das Leitelement 7 mit seiner konkaven Leitelement-Vorderseite 8 noch vor dem Fangelement 5 enden kann. Eine imaginäre Extrapolation 20 der konkaven Leitelement-Vorderseite 8 führt dabei unterhalb des Fangelementes 5 am Fangelement 5 vorbei, um dem Gutsstrom eine entsprechende Richtung vorzugeben.

Figuren 2 und 3 zeigen, dass das Leitelement 7 mit seiner konkaven Leitelement-Vorderseite 8 nicht schon vor dem Fangelement 5 endet, sondern unter dem Fangelement 5 an dem Fangelement 5 vorbeiführt.

Ferner zeigen die drei Figuren, dass das Leitelement 7 auf unterschiedliche Weisen befestigt werden kann. Gemäß Figur 1 kann sich am Leitelement 8 eine Klemmvorrichtung 9 befinden, mit der das Leitelement 8 am Zinkenstiel 3 geklemmt wird. Figur 2 zeigt die Verwendung einer Leitelementverschraubung 11, bei der mittels einer oder mehreren Schrauben das Leitelement 8 am Zinkenstiel 3 befestigt wird.

Figur 3 verdeutlicht, dass das Schar 6 mittels einer Scharverschraubung 10 am Zinkenstiel 3 befestigt werden kann. Dabei ist es möglich, das Leitelement 7 zwischen Schar 6 und Zinkenstiel 3 einzuklemmen.

### Bezugszeichenliste

- 1: Zinkenanordnung
- 2: Zugrichtung
- 3: Zinkenstiel
- 4: Federbereich
- 5: Fangelement
- 6: Schar
- 7: Leitelement
- 8: konkave Leitelement-Vorderseite
- 9: Klemmvorrichtung
- 10: Scharverschraubung
- 11: Leitelementverschraubung
- 20: imaginäre Extrapolation
- 100: Bodenbearbeitungsgerät
- 101: Rahmen

## Patentansprüche

1. Zinkenanordnung (1) eines Bodenbearbeitungsgerätes (100), umfassend:
- einen Zinkenstiel (3), wobei der Zinkenstiel (3) als Blattfeder ausgebildet ist, und wobei das obere Ende des Zinkenstiels (3) zur Befestigung an einem Rahmen (101) des Bodenbearbeitungsgerätes (100) ausgebildet ist,
- ein Schar (6) am unteren Ende des Zinkenstiels (3), wobei das Schar (6) durch den Boden in einer Zugrichtung (2) ziehbar ist,
- eine Zusatzfeder mit einem Federbereich (4) und einem Fangelement (5), wobei das Fangelement (5) den Zinkenstiel (3) zumindest teilweise umgreift,
- ein Leitelement (7), das ausgebildet und angeordnet ist, einen Gutsstrom aus Boden und/oder Pflanzenmaterial, welcher durch Ziehen des Schars (6) durch den Boden aufsteigt, am Fangelement (5) vorbeizuleiten,
- wobei das Leitelement (7) eine konkave Leitelement-Vorderseite (8) aufweist, entlang derer der Gutsstrom nach oben bewegbar ist;
- wobei das Leitelement (7) noch vor dem Fangelement (5) endet und eine am oberen Ende des Leitelements (7) fortgeführte imaginäre Extrapolation (20) der konkaven Leitelement-Vorderseite (8) unter dem Fangelement (5) vorbeiführt,
- oder wobei sich das Leitelement (7) mit seinem oberen Ende unter dem Fangelement (5) vorbei erstreckt.

2. Zinkenanordnung nach Anspruch 1, wobei der Zinkenstiel (3) S-förmig gebogen ist und dabei einen oberen Bogen und einen unteren Bogen bildet, wobei die konvexe Seite des oberen Bogens und die konkave Seite des unteren Bogens in Zugrichtung (2) zeigen.

3. Zinkenanordnung nach Anspruch 2, wobei das Fangelement (5) den Zinkenstiel (3) im Bereich des Übergangs vom oberen Bogen in den unteren Bogen zumindest teilweise, vorzugsweise vollständig, umgreift.

4. Zinkenanordnung nach Anspruch 2 oder 3, wobei das Leitelement (7) an der konkaven Seite des unteren Bogens angeordnet ist.

5. Zinkenanordnung nach einem der Ansprüche 2 bis 4, wobei die konkave Leitelement-Vorderseite (8) einen kleineren Krümmungsradius aufweist als die konkave Seite des unteren Bogens des Zinkenstiels (3).

6. Zinkenanordnung nach einem der vorhergehenden Ansprüche, wobei das Leitelement (7) seitlich gewendelt ist, um den Gutsstrom gleichzeitig nach oben und zur Seite zu leiten.

7. Zinkenanordnung nach einem der vorhergehenden Ansprüche, wobei das Leitelement (7) mittels einer den Zinkenstiel (3) umgreifenden Klemmvorrichtung (9) am Zinkenstiel (3) befestigt ist.

8. Zinkenanordnung nach einem der vorhergehenden Ansprüche, wobei das Leitelement (7) mittels einer Leitelementverschraubung (11) am Zinkenstiel (3) befestigt ist.

9. Zinkenanordnung nach einem der vorhergehenden Ansprüche, wobei das Schar (6) mittels einer Scharverschraubung (10) am Zinkenstiel (3) befestigt ist und das Leitelement (7) zwischen Schar (6) und Zinkenstiel (3) eingeklemmt ist.

10. Zinkenanordnung nach einem der vorhergehenden Ansprüche, wobei
- das Fangelement (5) dazu ausgebildet ist, eine Bewegung des Zinkenstiels (3) relativ zur Zusatzfeder im begrenzten Umfang zu ermöglichen,
- und/oder das Fangelement (5) als Anschlag für den Zinkenstiel (3) ausgebildet ist,
- und/oder der Federbereich (4) der Zusatzfeder als Blattfeder ausgebildet ist,
- und/oder der Federbereich (4) der Zusatzfeder bezüglich der Zugrichtung (2) hinter dem Zinkenstiel (3) angeordnet ist,
- und/oder der Federbereich (4) der Zusatzfeder zumindest teilweise am Zinkenstiel (3) anliegt,
- und/oder die Zusatzfeder mit dem Fangelement (5) endet,
- und/oder der Federbereich (4) und das Fangelement (5) miteinander verschweißt sind oder zusammen einteilig ausgebildet sind,
- und/oder der Federbereich (4) zur Befestigung am Rahmen (101) des Bodenbearbeitungsgerätes (100) ausgebildet ist.

11. Bodenbearbeitungsgerät (100) mit
- einem Rahmen (101),
- mehreren am Rahmen (101) befestigten Zinkenanordnungen (1) nach einem der vorhergehenden Ansprüche,
- und einer Zugvorrichtung zur Befestigung des Rahmens (101) an einer Zugmaschine.

## Claims

1. Tine assembly (1) of a soil working device (100), comprising:
- a tine stem (3), wherein the tine stem (3) is designed as a leaf spring, and wherein the upper end of the tine stem (3) is designed for attachment to a frame (101) of the soil working device (100),
- a coulter (6) at the lower end of the tine stem (3), wherein the coulter (6) can be pulled through the ground in a pulling direction (2),
- an additional spring with a spring region (4) and a catching element (5), wherein the catching element (5) at least partially surrounds the tine stem (3),
- a guide element (7) which is designed and arranged to guide a flow of material made of soil and/or plant material, which rises through the soil by pulling the coulter (6), past the catching element (5),
- wherein the guide element (7) has a concave guide element front side (8) along which the flow of material can be moved upwards;
- wherein the guide element (7) ends even before the catching element (5) and an imaginary extrapolation (20) of the concave guide element front side (8) continued at the upper end of the guide element (7) passes under the catching element (5),
- or wherein the guide element (7) extends with its upper end past under the catching element (5).

2. Tine assembly according to claim 1, wherein the tine stem (3) is bent in an S-shape and thereby forms an upper arc and a lower arc, wherein the convex side of the upper arc and the concave side of the lower arc point in the pulling direction (2).

3. Tine assembly according to claim 2, wherein the catching element (5) at least partially, preferably completely, surrounds the tine stem (3) in the region of the transition from the upper arc to the lower arc.

4. Tine assembly according to claim 2 or 3, wherein the guide element (7) is arranged on the concave side of the lower arc.

5. Tine assembly according to one of claims 2 to 4, wherein the concave guide element front side (8) has a smaller radius of curvature than the concave side of the lower arc of the tine stem (3).

6. Tine assembly according to one of the preceding claims, wherein the guide element (7) is laterally coiled in order to guide the flow of material simultaneously upwards and to the side.

7. Tine assembly according to one of the preceding claims, wherein the guide element (7) is fastened to the tine stem (3) by means of a clamping device (9) surrounding the tine stem (3).

8. Tine assembly according to one of the preceding claims, wherein the guide element (7) is fastened to the tine stem (3) by means of a guide element screw connection (11).

9. Tine assembly according to one of the preceding claims, wherein the coulter (6) is fastened to the tine stem (3) by means of a coulter screw connection (10) and the guide element (7) is clamped between the coulter (6) and the tine stem (3).

10. Tine assembly according to one of the preceding claims, wherein
- the catching element (5) is designed to enable a movement of the tine stem (3) relative to the additional spring to a limited extent,
- and/or the catching element (5) is designed as a stop for the tine stem (3),
- and/or the spring region (4) of the additional spring is designed as a leaf spring,
- and/or the spring region (4) of the additional spring is arranged behind the tine stem (3) with respect to the pulling direction (2),
- and/or the spring region (4) of the additional spring bears at least partially against the tine stem (3),
- and/or the additional spring ends with the catching element (5),
- and/or the spring region (4) and the catching element (5) are welded to one another or are formed together in one piece,
- and/or the spring region (4) is designed for attachment to the frame (101) of the soil working device (100).

11. Soil working device (100) with
- a frame (101),
- a plurality of tine assemblies (1) according to one of the preceding claims fastened to the frame (101),
- and a traction device for fastening the frame (101) to a tractor.

## Revendications

1. Ensemble dent (1) d'un appareil de traitement du sol (100), comprenant :
- une tige de dent (3), la tige de dent (3) étant réalisée sous forme de ressort à lame, et l'extrémité supérieure de la tige de dent (3) étant réalisée pour être fixée à un cadre (101) de l'appareil de traitement du sol (100),
- un soc (6) à l'extrémité inférieure de la tige de dent (3), le soc (6) pouvant être tiré à travers le sol dans une direction de traction (2),
- un ressort supplémentaire avec une zone de ressort (4) et un élément de capture (5), l'élément de capture (5) entourant au moins partiellement la tige de dent (3),
- un élément de guidage (7) qui est réalisé et disposé de manière à guider un flux de produit constitué de sol et/ou de matière végétale, qui monte à travers le sol est tiré à travers le sol, devant l'élément de capture (5),
- l'élément de guidage (7) présentant une face avant d'élément de guidage concave (8) le long de laquelle le flux de produit peut être déplacé vers le haut ;
- l'élément de guidage (7) se terminant encore devant l'élément de capture (5) et une extrapolation imaginaire (20), continue à l'extrémité supérieure de l'élément de guidage (7), de la face avant d'élément de guidage concave (8) passant sous l'élément de capture (5),
- ou l'élément de guidage (7) s'étendant avec son extrémité supérieure devant l'élément de capture (5).

2. Ensemble dent selon la revendication 1, dans lequel la tige de dent (3) est courbée en forme de S et forme ainsi un arc supérieur et un arc inférieur, le côté convexe de l'arc supérieur et le côté concave de l'arc inférieur étant orientés dans la direction de traction (2).

3. Ensemble dent selon la revendication 2, dans lequel l'élément de capture (5) entoure au moins partiellement, de préférence complètement, la tige de dent (3) dans la zone de la transition de l'arc supérieur à l'arc inférieur.

4. Ensemble dent selon la revendication 2 ou 3, dans lequel l'élément de guidage (7) est disposé sur le côté concave de l'arc inférieur.

5. Ensemble dent selon l'une quelconque des revendications 2 à 4, dans lequel la face avant d'élément de guidage concave (8) présente un rayon de courbure plus petit que le côté concave de l'arc inférieur de la tige de dent (3).

6. Ensemble dent selon l'une quelconque des revendications précédentes, dans lequel l'élément de guidage (7) est enroulé latéralement afin de guider le flux de produit simultanément vers le haut et vers le côté.

7. Ensemble dent selon l'une quelconque des revendications précédentes, dans lequel l'élément de guidage (7) est fixé à la tige de dent (3) au moyen d'un dispositif de serrage (9) entourant la tige de dent (3).

8. Ensemble dent selon l'une quelconque des revendications précédentes, dans lequel l'élément de guidage (7) est fixé à la tige de dent (3) au moyen d'un vissage d'élément de guidage (11).

9. Ensemble dent selon l'une quelconque des revendications précédentes, dans lequel le soc (6) est fixé à la tige de dent (3) au moyen d'un vissage de soc (10) et l'élément de guidage (7) est serré entre le soc (6) et la tige de dent (3).

10. Ensemble dent selon l'une quelconque des revendications précédentes, dans lequel
- l'élément de capture (5) est réalisé de manière à permettre un mouvement de la tige de dent (3) par rapport au ressort supplémentaire dans une étendue limitée,
- et/ou l'élément de capture (5) est réalisé sous forme de butée pour la tige de dent (3),
- et/ou la zone de ressort (4) du ressort supplémentaire est réalisée sous forme de ressort à lame,
- et/ou la zone de ressort (4) du ressort supplémentaire est disposée derrière la tige de dent (3) par rapport à la direction de traction (2),
- et/ou la zone de ressort (4) du ressort supplémentaire s'applique au moins partiellement contre la tige de dent (3),
- et/ou le ressort supplémentaire se termine avec l'élément de capture (5),
- et/ou la zone de ressort (4) et l'élément de capture (5) sont soudés l'un à l'autre ou sont réalisés ensemble d'une seule pièce,
- et/ou la zone de ressort (4) est réalisée pour être fixée au cadre (101) de l'appareil de traitement du sol (100).

11. Appareil de traitement du sol (100) avec
- un cadre (101),
- plusieurs ensembles dents (1) fixés au cadre (101) selon l'une quelconque des revendications précédentes,
- et un dispositif de traction pour fixer le cadre (101) à un tracteur.
